# EUROPÄISCHE PATENTSCHRIFT

(11) **EP 0 980 797 B1**
(45) Veröffentlichungstag und Bekanntmachung des Hinweises auf die Patenterteilung: **20.08.2008**
(21) Anmeldenummer: 99110793.9
(22) Anmeldetag: 04.06.1999
(51) Int. Cl.: B60R 21/20

(54) **Gassackmodul**
Air bag module
Module de sac de sécurité gonflable

(30) Priorität: 20.08.1998 DE 19837899
(43) Veröffentlichungstag der Anmeldung: 23.02.2000
(73) Patentinhaber: TAKATA - PETRI AG, 63743 Aschaffenburg (DE)
(72) Erfinder: Baur, Andreas, 89275 Elchingen (DE); Heudorfer, Benedikt, 89278 Nersingen (DE)
(74) Vertreter: Maikowski, Michael

(56) Entgegenhaltungen:
- WO-A-98/14352
- DE-A- 19 731 973
- US-A- 5 580 082
- US-A- 5 782 481
- US-A- 5 794 968

## Beschreibung

Die Erfindung betrifft ein Gassackmodul für Kraftfahrzeuge mit einem Gehäuse für einen zusammengefalteten aufblasbaren Gassack und einem am Gehäuse verriegelbaren Halteelement.

Eine derartiges Modul ist aus US5794968A bekannt und dient dazu, einen zusammengefalteten aufblasbaren Gassack zusammen mit einem Gasgenerator, der den Gassack im Crashfall aufbläst, als eine Einheit im Fahrzeug z. B. als Fahrer-, Beifahrer- oder Seitenairbag zu montieren.

Es ist das der Erfindung zugrundeliegende Problem (Aufgabe), ein Gassackmodul für Kraftfahrzeuge zu schaffen, das möglichst einfach aufgebaut und leicht zusammenzusetzen ist.

Gelöst wird diese Aufgabe durch die Merkmale des Anspruchs 1 und insbesondere dadurch, daß sich das Halteelement im verriegelten Zustand mit wenigstens einem Halteabschnitt durch die Seitenwand des Gehäuses im Bereich einer relativ zur Seitenwand abbiegbaren Lasche der Seitenwand hindurch erstreckt.

Die relativ zur Seitenwand abbiegbare Lasche gestattet das Hindurchführen des Halteabschnitts durch die Seitenwand, so daß die Erfindung es ermöglicht, das Halteelement am Gehäuse dadurch zu verriegeln, daß der Halteabschnitt mit der Seitenwand des Gehäuses in Eingriff gebracht wird, ohne daß eine hierfür ausreichend große Öffnung in der Seitenwand ausgebildet werden muß. Die Lasche verhindert dabei, daß der Halteabschnitt von selbst außer Eingriff mit dem Gehäuse gelangt. Außerdem kann auf separate Verbindungsmittel wie Schrauben, Klammern etc. verzichtet werden.

Gemäß einer bevorzugten Ausführungsform der Erfindung ist die Lasche als Bestandteil der Seitenwand ausgebildet, wobei der Umriß der Lasche durch eine bevorzugt schlitzförmige Aussparung und/oder durch einen Einschnitt in der Seitenwand festgelegt ist.

Hierdurch kann die Seitenwand des Gehäuses auf besonders einfache Weise zur Verriegelung mit dem Halteelement ausgebildet werden.

Gemäß einem weiteren bevorzugten Ausführungsbeispiel der Erfindung ist der Halteabschnitt des Halteelements im verriegelten Zustand zwischen der sich etwa parallel zur Seitenwand erstreckenden Lasche und dem der Lasche zugewandten Rand der Seitenwand eingeklemmt.

Auf diese Weise ist im verriegelten Zustand der Halteabschnitt und damit das Halteelement durch die Lasche derart gesichert, daß der Halteabschnitt nicht von selbst außer Eingriff mit der Seitenwand gelangen kann.

Gemäß einem weiteren bevorzugten Ausführungsbeispiel der Erfindung weist die Lasche zumindest bereichsweise eine geringere Materialstärke als zumindest die Lasche umgebende Bereiche der Seitenwand auf.

Die zum Bewegen der Lasche relativ zur Seitenwand des Gehäuses erforderliche Kraft wird auf diese Weise reduziert.

Gemäß einer weiteren bevorzugten Ausführungsform der Erfindung ist die Lasche aus einer etwa parallel zur Seitenwand verlaufenden Stellung gegen eine Rückstellkraft relativ zur Seitenwand abbiegbar.

Hierdurch kann die Lasche nach dem Hindurchführen des Halteabschnitts durch die Seitenwand in ihre Ausgangsstellung, in der sich die Lasche etwa parallel zur Seitenwand erstreckt, zurückfedern, wodurch die Lasche automatisch in eine den Halteabschnitt sichernde Stellung gelangt.

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine teilweise geschnittene Seitenansicht einer Ausführungsform eines erfindungsgemäßen Gassackmoduls,
- Fig. 2a und 2b: die Seitenwand des Gehäuses eines erfindungsgemäßen Gassackmoduls im Bereich einer Lasche in einer Seitenansicht bzw. Draufsicht, und die
- Fig. 3a bis 3c: Querschnittsteilansichten eines Halteabschnitts und einer Seitenwand eines Gehäuses eines erfindungsgemäßen Gassackmoduls in drei verschiedenen Stadien des Verriegelungsvorgangs.

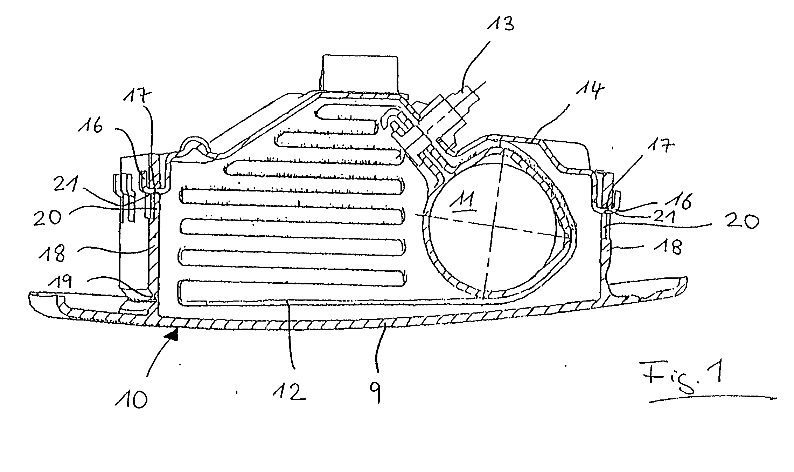

Das erfindungsgemäße Gassackmodul gemäß Fig. 1, das bevorzugt als Front-Seitenairbag-Modul eingesetzt wird, umfaßt ein aus einer Deckplatte 9 und einer daran angeformten Seitenwand 18 bestehendes, kappenförmiges Gehäuse 10 aus Kunststoff und ein als die offene Seite des Gehäuses 10 verschließendes Bodenblech ausgebildetes Halteelement 14, das über an seinem Umfang vorgesehene Halteabschnitte 16 mit der Seitenwand 18 des Gehäuses 10 in der weiter unten beschriebenen, erfindungsgemäßen Weise in Eingriff steht.

Im Gehäuse 10 sind ein zusammengefalteter Gassack 12 sowie ein Gasgenerator 11 angeordnet, mit dem der Gassack 12 im Crashfall aufgeblasen wird. Mit mehreren durch das Halteelement 14 hindurchgeführten Bolzen 13, von denen in Fig. 1 lediglich ein Bolzen 13 dargestellt ist, ist der Gasgenerator 11 am Halteelement 14 befestigt.

Auf einer vom Gasgenerator 11 abgewandten Seite des Gassacks 12 weist die Seitenwand 18 des Gehäuses 10 eine Sollbruchstelle 19 reduzierter Materialstärke auf, an der die Seitenwand 18 im Crashfall durch den sich aufblasenden Gassack 12 aufgerissen wird.

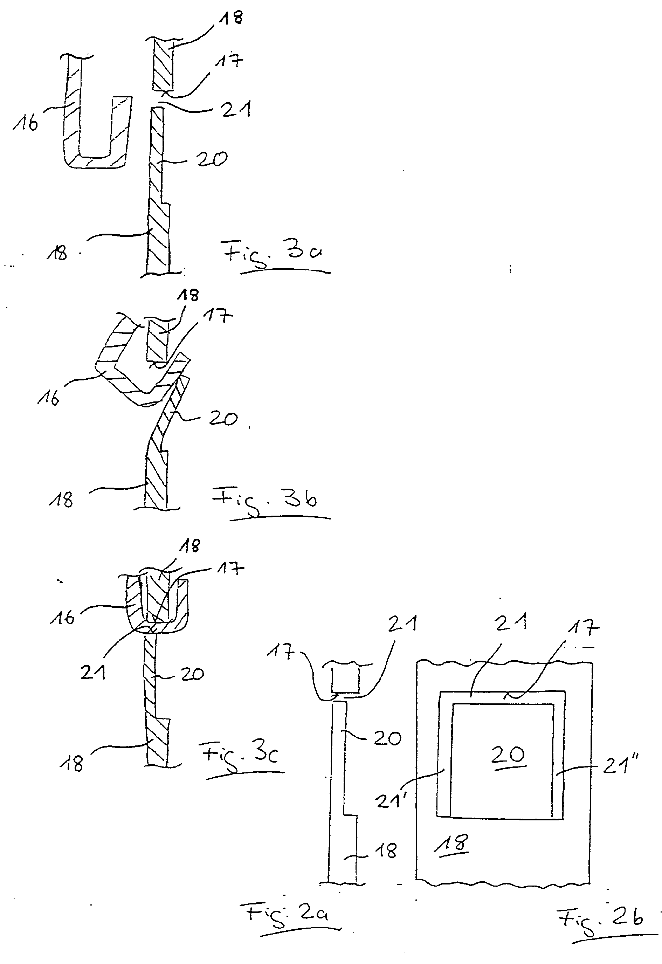

Die Halteabschnitte 16 des Halteelements 14 sind als einzelne nach außen vorstehende Laschen ausgebildet und über den gesamten Umfang des Halteelements 14 verteilt angeordnet, wobei sie jeweils nach Art eines Hakens zweifach um jeweils etwa 90° derart nach außen und oben abgewinkelt sind, daß sie einen etwa U-förmigen Querschnitt aufweisen. Im mit der Seitenwand 18 des Gehäuses 10 verriegelten Zustand gemäß Fig. 1 und 3c erstrecken sich die Halteabschnitte 16 des Halteelements 14 durch in der Seitenwand 18 des Gehäuses 10 vorgesehene Öffnungen 21 hindurch und umgreifen den oberhalb der Öffnungen 21 vorhandenen Rand 17 der Seitenwand 18.

Aus Fig. 2a und 2b ist zu erkennen, daß in der Seitenwand 18 durch auf drei Seiten eines rechteckigen Bereiches vorgesehene Aussparungen 21, 21', 21'' Laschen 20 ausgebildet sind, die eine um etwa die Hälfte geringere Materialstärke als die die Laschen 20 umgebenden Bereiche der Seitenwand 18 aufweisen. Die Laschen 20 sind elastisch verformbar und aus ihrer Stellung gemäß Fig. 2a und 2b relativ zur Seitenwand 18 gegen eine Rückstellkraft abbiegbar, welche die Laschen 20 wieder in die Stellung gemäß Fig. 2a zurückzustellen sucht.

Anstelle der zusammen einen etwa U-förmigen Schlitz in der Seitenwand 18 bildenden Aussparungen 21, 21', 21'' kann in der Seitenwand 18 auch ein Einschnitt vorgesehen sein, wobei in einem solchen Fall zwischen den Laschen 20 und dem die Laschen 20 jeweils umgebenden Bereich der Seitenwand 18 keine Zwischenräume vorhanden wären.

Die Fig. 3a bis 3c zeigen am Beispiel eines Halteabschnitts 16, in welcher Weise das Halteelement 14 an der Seitenwand 18 des Gehäuses 10 verriegelt wird.

Der Halteabschnitt 16 befindet sich gemäß Fig. 3a zunächst auf der Innenseite der Seitenwand 18, d. h. innerhalb des Gehäuses 10.

Fig. 3b zeigt, wie der Halteabschnitt 16 gegen die sich parallel zur Seitenwand 18 erstreckende Lasche 20 gedrückt wird, um den nach oben abgewinkelten Teil des Halteabschnitts 16 unter dem der Lasche 20 zugewandten Rand 17 der Seitenwand 18 hindurch nach außen zu führen. Die Lasche 20 wird dadurch nach außen abgebogen, und zwar aufgrund ihrer elastischen Verformbarkeit gegen eine Rückstellkraft.

Wenn der nach oben abgewinkelte Teil des Halteabschnitts 16 außerhalb des Gehäuses parallel zur Seitenwand 18 ausgerichtet wird, kann die Lasche 20 gemäß Fig. 3c in ihre Ausgangsstellung zurückfedern, so daß sich der senkrecht zur Seitenwand 18 verlaufende Teil des Halteabschnitts 16 zwischen der Lasche 20 und dem Rand 17 der Seitenwand 18 befindet.

Die Breite der Aussparung 21 entspricht der Wandstärke des sich durch die Aussparung 21 hindurch erstreckenden Teils des Halteabschnitts 16, so daß der Halteabschnitt 16 - und damit das Halteelement 14 - durch die Lasche 20 derart gesichert ist, daß der Halteabschnitt 16 nicht frei vom Rand 17 der Seitenwand 18 weg bewegbar ist.

Das mit mehreren über seinen Umfang verteilt angeordneten Halteabschnitten versehene Halteelement 14 wird am Gehäuse 10 derart verriegelt, daß es zunächst mit einer Längsseite in die Seitenwand 18 des Gehäuses 10 eingehängt wird, indem die an dieser Längsseite vorgesehenen Halteabschnitte 16 jeweils im Bereich einer ihnen zugeordneten Lasche 20 mit der Seitenwand 18 in Eingriff gebracht werden. Danach wird das auf diese Weise einseitig eingehängte Halteelement 14 in seine Endstellung gemäß Fig. 1 geschwenkt, um die übrigen Halteabschnitte 16 mit der Seitenwand 18 in Eingriff zu bringen. Durch geringfügiges Aufweiten des Gehäuses 10 und/oder Verbiegen des Halteelementes 14 kann dabei das Halteelement 14 in das Gehäuse 10 gedrückt werden, wobei sich die Halteabschnitte 16 jeweils innen an der Seitenwand 18 entlang bis zu der ihnen zugeordneten Lasche 20 bewegen, um schließlich jeweils durch Abbiegen der Lasche 20 nach außen durch die Seitenwand 18 geführt werden zu können.

### Bezugszeichenliste

- 9: Deckplatte
- 10: Gehäuse
- 11: Gasgenerator
- 12: Gassack
- 13: Bolzen
- 14: Halteelement
- 16: Halteabschnitt
- 17: Rand der Seitenwand
- 18: Seitenwand
- 19: Sollbruchstelle
- 20: Lasche
- 21, 21', 21'': Aussparungen

## Patentansprüche

1. Gassackmodul für Kraftfahrzeuge mit einem Gehäuse (10) für einen zusammengefalteten aufblasbaren Gassack (12) und einem am Gehäuse (10) verriegelbaren Halteelement (14),
**gekennzeichnet durch**
eine relativ zur Seitenwand (18) des Gehäuses (10) abbiegbare Lasche (20) der Seitenwand (18), die derart abbiegbar ausgebildet ist, dass zum Verriegeln des Halteelementes (14) am Gehäuse (10) wenigstens ein Halteabschnitt (16) des Halteelements (14) **durch** Abbiegen der Lasche (20) relativ zur Seitenwand (18) durch die Seitenwand (18) hindurchgeführt werden kann, so dass sich das Halteelement (14) im verriegelten Zustand mit dem Halteabschnitt (16) **durch** die Seitenwand (18) des Gehäuses (10) im Bereich der abbiegbaren Lasche (20) hindurch erstreckt.

2. Gassackmodul nach Anspruch 1,
**dadurch gekennzeichnet,**
**daß** die Lasche (20) als Bestandteil der Seitenwand (18) ausgebildet und der Umriß der Lasche (20) durch eine bevorzugt schlitzförmige Aussparung (21, 21', 21'') und/oder durch einen Einschnitt in der Seitenwand (18) festgelegt ist.

3. Gassackmodul nach Anspruch 1 oder 2,
**dadurch gekennzeichnet,**
**daß** der Halteabschnitt (16) des Halteelements (14) im verriegelten Zustand zwischen der sich bevorzugt etwa parallel zur Seitenwand (18) erstreckenden Lasche (20) und dem der Lasche (20) zugewandten Rand (17) der Seitenwand (18) eingeklemmt ist.

4. Gassackmodul nach zumindest einem der vorhergehenden Ansprüche,
**dadurch gekennzeichnet,**
**daß** die Lasche (20) wenigstens bereichsweise eine geringere Materialstärke als zumindest die Lasche (20) umgebende Bereiche der Seitenwand (18) aufweist.

5. Gassackmodul nach zumindest einem der vorhergehenden Ansprüche,
**dadurch gekennzeichnet,**
**daß** die Lasche (20) im Bereich des im verriegelten Zustand dem Halteelement (14) zugewandten freien Endes der Seitenwand (18) vorgesehen ist.

6. Gassackmodul nach zumindest einem der vorhergehenden Ansprüche,
**dadurch gekennzeichnet,**
**daß** die Lasche (20) einen etwa rechteckigen, bevorzugt näherungsweise quadratischen Querschnitt besitzt.

7. Gassackmodul nach zumindest einem der vorhergehenden Ansprüche,
**dadurch gekennzeichnet,**
**daß** die Lasche (20) aus einer etwa parallel zur Seitenwand (18) verlaufenden Stellung gegen eine Rückstellkraft relativ zur Seitenwand (18) abbiegbar ist.

8. Gassackmodul nach zumindest einem der vorhergehenden Ansprüche,
**dadurch gekennzeichnet,**
**daß** sich der Halteabschnitt (16) des Halteelements (14) im verriegelten Zustand durch die Seitenwand (18) des Gehäuses (10) hindurch von innen nach außen erstreckt.

9. Gassackmodul nach zumindest einem der vorhergehenden Ansprüche,
**dadurch gekennzeichnet,**
**daß** der Halteabschnitt (16) einstückig mit dem Halteelement (14) ausgebildet ist.

10. Gassackmodul nach zumindest einem der vorhergehenden Ansprüche,
**dadurch gekennzeichnet,**
**daß** der Halteabschnitt (16) im verriegelten Zustand einen der Lasche (20) zugewandten Rand (17) der Seitenwand (18) umgreift und bevorzugt U-förmig oder hakenartig abgewinkelt oder gebogen ist.

11. Gassackmodul nach zumindest einem der vorhergehenden Ansprüche,
**dadurch gekennzeichnet, daß** die Seitenwand (18) des Gehäuses (10) mehrere, jeweils einem Halteabschnitt (16) des Halteelements (14) zugeordnete Laschen (20) aufweist, die bevorzugt über den Umfang der Seitenwand (18) verteilt angeordnet sind.

12. Gassackmodul nach zumindest einem der vorhergehenden Ansprüche,
**dadurch gekennzeichnet,**
**daß** das Gehäuse (10) als insbesondere aus Kunststoff hergestellte Abdeckkappe und das Halteelement (16) als Bodenblech ausgebildet ist.

## Claims

1. Air bag module for motor vehicles, with a housing (10) for an inflatable air bag (12) which can be folded up, and with a retaining element (14) which can be locked to the housing (10), **characterized by** a tab (20) of the side wall (18), which tab is bendable relative to the side wall (18) of the housing (10) and is designed such that it can be bent in such a manner that, in order to lock the retaining element (14) to the housing (10), at least one retaining section (16) of the retaining element (14) can be guided through the side wall (18) by bending of the tab (20) relative to the side wall (18) such that, in the locked state, the retaining element (14) extends with the retaining section (16) through the side wall (18) of the housing (10) in the region of the bendable tab (20).

2. Air bag module according to Claim 1, **characterized in that** the tab (20) is designed as part of the side wall (18) and the contour of the tab (20) is defined by a preferably slot-shaped cutout (21, 21', 21") and/or by an incision in the side wall (18).

3. Air bag module according to Claim 1 or 2, **characterized in that**, in the locked state, the retaining section (16) of the retaining element (14) is clamped between the tab (20), which preferably extends approximately parallel to the side wall (18), and that edge (17) of the side wall (18) which faces the tab (20).

4. Air bag module according to at least one of the preceding claims, **characterized in that** at least some regions of the tab (20) have a smaller material thickness than at least regions of the side wall (18) that surround the tab (20).

5. Air bag module according to at least one of the preceding claims, **characterized in that** the tab (20) is provided in the region of the free end of the side wall (18), which end faces the retaining element (14) in the blocked state.

6. Air bag module according to at least one of the preceding claims, **characterized in that** the tab (20) has an approximately rectangular, preferably virtually square cross section.

7. Air bag module according to at least one of the preceding claims, **characterized in that** the tab (20) can be bent relative to the side wall (18) counter to a restoring force from a position running approximately parallel to the side wall (18).

8. Air bag module according to at least one of the preceding claims, **characterized in that**, in the locked state, the retaining section (16) of the retaining element (14) extends through the side wall (18) of the housing (10) from the inside to the outside.

9. Air bag module according to at least one of the preceding claims, **characterized in that** the retaining section (16) is formed integrally with the retaining element (14).

10. Air bag module according to at least one of the preceding claims, **characterized in that**, in the locked state, the retaining section (16) engages around an edge (17) of the side wall (18), which edge faces the tab (20), and is preferably angled or bent in a U-shape or in the manner of a hook.

11. Air bag module according to at least one of the preceding claims, **characterized in that** the side wall (18) of the housing (10) has a plurality of tabs (20) which are each assigned to one retaining section (16) of the retaining element (14) and are preferably distributed over the circumference of the side wall (18).

12. Air bag module according to at least one of the preceding claims, **characterized in that** the housing (10) is designed as a covering cap produced, in particular, from plastic, and the retaining element (16) is designed as a bottom plate.

## Revendications

1. Module de sac à gaz pour véhicules avec un boîtier (10) pour un sac à gaz gonflable plié (12) et un élément de support (14) verrouillable sur le boîtier (10),
**caractérisé par**
une attache (20) de la paroi latérale (18) pouvant être cintrée par rapport à la paroi latérale (18) du boîtier (10), qui est réalisée de manière cintrée de telle manière que pour verrouiller l'élément de support (14) sur le boîtier (10) au moins un segment de support (16) de l'élément de support (14) peut être introduit à travers la paroi latérale (18) par cintrage de l'attache (20) par rapport à la paroi latérale (18), de sorte que l'élément de support (14) s'étend en position verrouillée avec le segment de support (16) à travers la paroi latérale (18) du boitier (10) dans la zone de l'attache qui peut être cintrée (20).

2. Module de sac de sécurité gonflable selon la revendication 1,
**caractérisé en ce**
**que** l'attache (20) est configurée comme un composant de la paroi latérale (18) et le contour de l'attache (20) est déterminé par une cavité (21, 21', 21") de préférence en forme de fente et/ou par une découpe dans la paroi latérale (18).

3. Module de sac de sécurité gonflable selon les revendications 1 ou 2,
**caractérisé en ce**
**que** le segment de support (16) de l'élément de support (14) est coincé en position fermée entre l'attache (20) s'étendant de préférence à peu près parallèlement à la paroi latérale (18) et le bord (17) de la paroi latérale (18) orienté vers l'attache (20).

4. Module de sac de sécurité gonflable selon l'une des revendications précédentes,
**caractérisé en ce**
**que** l'attache (20) présente au moins dans cette zone une épaisseur plus faible que la zone entourant au moins l'attache (20) de la paroi latérale (18).

5. Module de sac de sécurité gonflable selon au moins l'une des revendications précédentes,
**caractérisé en ce**
**que** l'attache (20) est prévue dans la zone de l'extrémité libre de la paroi latérale (18) orientée en position verrouillée vers l'élément de support (14).

6. Module de sac de sécurité gonflable selon au moins l'une des revendications précédentes,
**caractérisé en ce**
**que** l'attache (20) possède une section transversale rectangulaire, de préférence approximativement carrée.

7. Module de sac de sécurité gonflable selon au moins l'une des revendications précédentes,
**caractérisé en ce**
**que** l'attache (20) peut être cintrée à partir d'une position à peu près parallèle à la paroi latérale (18) pour résister à une force de rappel par rapport à la paroi latérale (18).

8. Module de sac de sécurité gonflable selon au moins l'une des revendications précédentes,
**caractérisé en ce**
**que** le segment de support (16) de l'élément de support (14) en position verrouillée s'étend à travers la paroi latérale (18) du boitier (10) de l'intérieur vers l'extérieur.

9. Module de sac de sécurité gonflable selon au moins l'une des revendications précédentes,
**caractérisé en ce**
**que** le segment de support (16) est configuré d'une seule pièce avec l'élément de support (14).

10. Module de sac de sécurité gonflable selon au moins l'une des revendications précédentes,
**caractérisé en ce**
**que** le segment de support (16) en position verrouillée entoure un bord (17) de la paroi latérale (18) orientée vers l'attache (20) et est à angle droit ou cintré de préférence en forme de U ou de crochet.

11. Module de sac de sécurité gonflable selon au moins l'une des revendications précédentes,
**caractérisé en ce**
**que** la paroi latérale (18) du boîtier (10) comporte plusieurs attaches (20) ajoutées respectivement à un segment de support (16) de l'élément de support (14), lesquels colliers sont de préférence disposés répartis sur le périmètre de la paroi latérale (18).

12. Module de sac de sécurité gonflable selon au moins l'une des revendications précédentes,
**caractérisé en ce**
**que** le boîtier (10) est réalisé comme capot de protection en particulier en matière plastique et l'élément de support (16) comme une tôle de fond.
